# EUROPÄISCHE PATENTSCHRIFT

(11) **EP 0 889 852 B1**
(45) Veröffentlichungstag und Bekanntmachung des Hinweises auf die Patenterteilung: **23.02.2000**
(21) Anmeldenummer: 97908249.2
(22) Anmeldetag: 17.03.1997
(51) Int. Cl.: C02F 1/461

(54) **BEGASUNGSVORRICHTUNG**
GASIFICATION DEVICE
DISPOSITIF DE GAZEIFICATION

(30) Priorität: 28.03.1996 DE 19612288
(43) Veröffentlichungstag der Anmeldung: 13.01.1999
(73) Patentinhaber: SIEMENS AKTIENGESELLSCHAFT, 80333 München (DE)
(72) Erfinder: PUTHAWALA, Anwer, D-91054 Buckenhof (DE)
(86) Internationale Anmeldenummer: EP9701333
(87) Internationale Veröffentlichungsnummer: WO9736827

(56) Entgegenhaltungen:
- EP-A- 0 244 565
- DD-A- 203 711
- DE-A- 2 620 634
- DE-A- 3 639 572
- US-A- 4 005 014
- US-A- 5 205 994
- PATENT ABSTRACTS OF JAPAN vol. 018, no. 625 (C-1279), 29.November 1994 & JP 06 238277 A (JIYANITSUKUSU KK), 30.August 1994,

## Beschreibung

Die Erfindung betrifft eine Begasungsvorrichtung für in einem Teilsystem einer technischen Anlage geführtes Wasser mit Wasserstoff.

In einer Vielzahl von technischen Anlagen, beispielsweise in chemischen Produktionsstätten oder auch in nuklear oder fossil betriebenen Kraftwerksanlagen, sind Teilsysteme vorgesehen, in denen Wasser geführt wird. Bei einem derartigen Teilsystem kann es sich beispielsweise um einen Kühlkreislauf oder auch um einen Umlaufkreis für ein Arbeitsmedium handeln. Für das in einem solchen Teilsystem geführte Wasser kann eine Begasung mit Wasserstoff aus verschiedenen Gründen erforderlich sein.

Beispielsweise führt einerseits eine hohe Sauerstoffkonzentration im in dem Teilsystem geführten Wasser zur Korrosion von Einbauteilen oder Rohren des Teilsystems. Dies kann durch eine Begasung des Wassers mit Wasserstoff unterbunden werden, da der dem Wasser zugeführte Wasserstoff sich mit dem überschüssigen Sauerscoff verbindet und so die Sauerstoffkonzentration im Wasser reduziert.

Auch für einen Primärkühlkreislauf als Teilsystem eines Druckwasserreaktors eines Kernkraftwerks ist üblicherweise eine Begasung des darin als Kühlmedium geführten Wassers mit Wasserstoff vorgesehen. In diesem Fall soll dadurch einer radiolytischen Zersetzung des im Kühlkreis strömenden Mediums entgegengewirkt werden.

Zur Begasung von in einem solchen Teilsystem geführten Wasser mit Wasserstoff oder Sauerstoff ist üblicherweise ein Gaseinspeisesystem vorgesehen. Dabei ist an das mit Wasserstoff oder mit Sauerstoff zu versorgende Teilsystem üblicherweise über ein Rohrsystem ein Gas-Vorratsbehälter angeschlossen, in dem eine Wasserstoff- bzw. Sauerstoffreserve vorgehalten wird. Ein derartiges Gaseinspeisesystem umfaßt jedoch üblicherweise eine Vielzahl von Komponenten, wie z.B. Lagerbehälter, Rohrleitungen oder Sicherheitseinrichtungen, und ist somit aufwendig und anfällig. Ein derartiges Einspeisesystem für Wasserstoff muß zudem, insbesondere aufgrund einer möglichen Bildung explosiver Gasgemische bei aus dem Einspeisesystem austretendem Wasserstoff, kontinuierlich auf Leckagen geprüft werden.

Der Erfindung liegt daher die Aufgabe zugrunde, eine Begasungsvorrichtung der obengenannten Art anzugeben, mit der eine schnelle und exakte Einstellung des Wasserstoff gehaltes des im Teilsystem geführten Wassers auf besonders einfache und zuverlässige Weise und mit geringem Wartungsaufwand gewährleistet ist.

Diese Aufgabe wird erfindungsgemäß gelöst, indem in das Teilsystem eine Elektrolyseeinheit zur Zersetzung einer Teilmenge des dort geführten Wassers in Wasserstoff und Sauerstoff geschaltet ist, wobei an die Elektrolyseeinrichtung ein Ableitungssystem für Sauerstoff angeschlossen ist.

Die Erfindung geht dabei von der Überlegung aus, die Übertragungswege für den Wasserstoff bzw. den Sauerstoff besonders kurz auszulegen. Eine geeignete Verkürzung der Übertragungswege ist erreichbar, indem auf eine zentrale Gaslagerung verzichtet und der Wasserstoff unmittelbar an dem Ort erzeugt wird, an dem die Begasung des Teilsystems vorgesehen ist. Dies ist auf besonders effektive Weise erreichbar, indem eine Teilmenge des im Teilsystem geführten Wassers selbst zur Erzeugung des Wasserstoffs bzw. des Sauerstoffs herangezogen wird. Dies kann durch eine geeignete Zersetzung dieser Teilmenge in Wasserstoff und Sauerstoff erreicht werden, wobei der dabei erzeugte Wasserstoff oder der dabei erzeugte Sauerstoff unmittelbar in das nicht zersetzte, im Teilsystem geführte Wasser eingebracht werden. Durch das Ableitungssystem kann das bei der Zersetzung der Teilmenge des Wassers entstehende und, nicht für die Begasung des Wassers benötigte Gas auf besonders einfache Weise abgeführt sowie einer anderen Verwendung zugeführt werden.

Zweckmäßigerweise umfaßt die Elektrolyseeinheit eine Anzahl von Membranelektrolysezellen. Bei einer derartigen Membranelektrolysezelle wird das Funktionsprinzip einer Brennstoffzelle, wie sie beispielsweise aus dem Aufsatz "Brennstoffzellen für Elektrotraktion", K. Straßer, VDI-Berichte, Nr. 912 (1992), S. 125 ff., bekannt ist, umgekehrt. Dazu wird einer zwischen einer Anode und einer Kathode angeordneten Membran Wasser zugeführt. Durch Anlegen einer Versorgungsspannung zwischen der Anode und der Kathode wird das Wasser elektrolytisch in Wasserstoff und Sauerstoff zersetzt. Eine derartige Membranelektrolysezelle zeichnet sich durch eine besonders kompakte Bauweise aus, so daß eine Elektrolyseeinheit mit einer Anzahl von Membranelektrolysezellen auf besonders engem Raum untergebracht sein kann. Daher kann eine derartige Elektrolyseeinheit besonders flexibel und an die spezifischen Bedürfnisse des Teilsystems angepaßt in das Teilsystem geschaltet sein.

Um eine besonders effektive Lösung des in das Wasser eingespeisten Wasserstoffs im Wasser zu gewährleisten, ist der Elektrolyseeinheit vorteilhafterweise ein vom Wasser des Teilsystems durchströmbarer Durchmischer nachgeschaltet.

Alternativ oder zusätzlich ist für eine besonders gute Lösung des einzuspeisenden Gases im Wasser der Elektrolyseeinheit vorteilhafterweise ein Regelsystem zur Einstellung eines vorgebbaren Wasserdrucks nachgeschaltet. Die Abhängigkeit der Löslichkeit von Wasserstoff oder Sauerstoff in Wassser vom Druck des Wassers ist somit auf besonders einfach Weise für das Begasungssystem nutzbar.

Weiterhin ist der Elektrolyseeinheit zweckmäßigerweise ein Ionenaustauscher als Filter vorgeschaltet.

Die mit der Erfindung erzielten Vorteile bestehen insbesondere darin, daß durch die in das Teilsystem geschaltete Begasungsvorrichtung eine Produktion des zur Begasung des Wassers erforderlichen Wasserstoffs durch Zersetzung einer Teilmenge des im Teilkreis geführten Wassers selbst möglich ist. Somit sind keine verfahrenstechnischen Peripherieanlagen zur Begasung des Teilsystems mit Wasserstoff oder Sauerstoff erforderlich. Insbesondere ist kein aufwendiges Gasvorratssystem mit den entsprechenden Rohrleitungen, Regeleinrichtungen und Gasabscheidern erforderlich.

Eine aufwendige Lagerung und ein störanfälliger Transport des Wasserstoffs über lange Strecken sind nicht erforderlich, so daß dadurch bedingte Wartungsarbeiten minimiert sind. Zudem ist eine dezentrale Anordnung einer Anzahl von Begasungsvorrichtungen am Teilsystem aufgrund der kompakten Bauweise der Elektrolyseeinheit in besonders einfacher Weise möglich, so daß die Produktion des Wasserstoffs bzw. Sauerstoffs besonders flexibel und an aktuelle Erfordernisse anpaßbar ist.

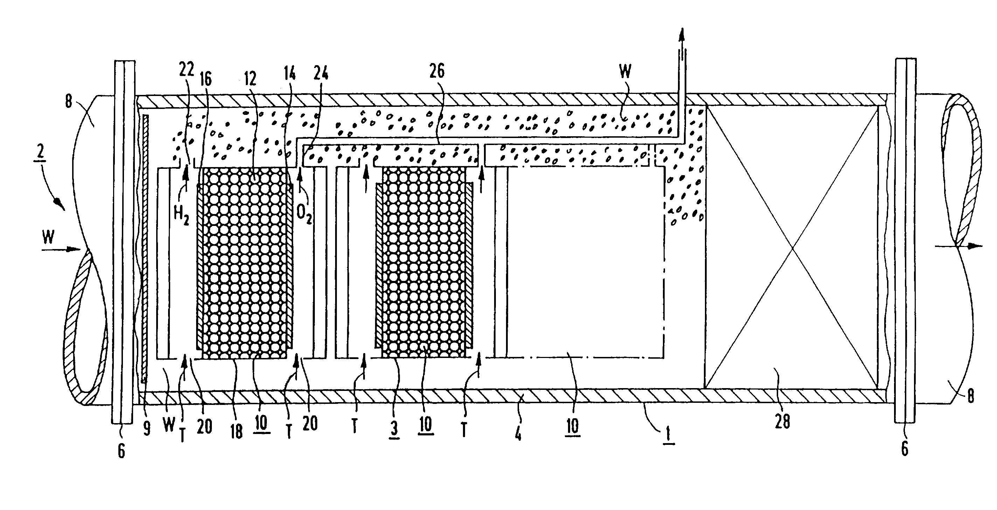

Ein Ausführungsbeispiel der Erfindung wird anhand einer Zeichnung näher erläutert. Darin zeigt die Figur eine Begasungsvorrichtung für ein Teilsystem einer technischen Anlage.

Die Begasungsvorrichtung 1 gemäß der Figur ist zur Begasung von in einem auszugsweise dargestellten Teilsystem 2 einer technischen Anlage geführtem Wasser W mit Wasserstoff H₂ vorgesehen. Das Teilsystem 2 kann dabei beispielsweise ein Kühlwasserkreislauf einer chemischen Produktionsstätte, ein Wasser-Dampf-Kreislauf einer Kraftwerksanlage oder auch ein Primär- oder Sekundärkreislauf einer Kernkraftswerkanlage sein. Es kann sich aber auch um ein beliebiges anderes Teilsystem 2 einer technischen Anlage handeln, in dem Wasser W geführt ist.

Die Begasungsvorrichtung 1 umfaßt eine Elektrolyseeinheit 3, die in einem Rohrstück 4 angeordnet ist. Das Rohrstück 4 ist seinerseits über Flansche 6 in ein Rohrleitungssystem 8 des Teilsystems 2 geschaltet. Insbesondere für den Fall, daß das Teilsystem 2 ein Primär- oder Sekundärkreislauf einer Kernkraftswerkanlage ist, ist das Rohrleitungssystem 8 dabei zweckmäßigerweise eine über (nicht dargestellte) Ventile absperrbare Bypassleitung.

Zur Sicherstellung einer für die Funktionsfähigkeit der Elektrolyseeinheit 3 ausreichenden Wasserreinheit ist dieser eine Ionenaustauschereinheit 9 als Filterelement vorgeschaltet.

Die Elektrolyseeinheit 3 umfaßt eine Anzahl von Membranelektrolysezellen 10. Bei jeder Membranelektrolysezelle 10 ist eine Membran 12 aus einem polymeren Elektrolyt zwischen einer Anode 14 und einer Kathode 16 angeordnet. Für eine besonders hohe Resistenz gegen Korrosion bestehen die Anode 14 und die Kathode 16 vorzugsweise aus Platin oder einer Platinlegierung. Es können aber auch andere Materialien vorgesehen sein.

Die Anode 14 und die Kathode 16 sind in nicht näher dargestellter Art und Weise mit einer Spannungsquelle verbunden. Zur Steuerung der Wasserstoff- oder Sauerstofproduktion der Membranelektrolysezellen 10 ist die Spannungsquelle in Abhängigkeit eines Gaskonzentrations-Meßwertes des Wassers W regelbar.

Für jede Membranelektrolysezelle 10 ist deren Membran 12 mit der an ihr angeordneten Anode 14 und der an ihr angeordneten Kathode 16 von einem Gehäuse 18 umschlossen. Das Gehäuse 18 jeder Membranelektrolysezelle 10 weist eine Anzahl von Zutrittsöffnungen 20 für Wasser W sowie eine Anzahl von Austrittsöffnungen 22 für Wasserstoff H₂ auf. An einer ebenfalls im Gehäuse 18 jeder Membranelektrolysezelle 10 vorgesehenen Austrittsöffnung 24 für Sauerstoff O₂ ist ein Ableitungssystem 26 angeschlossen, das durch das Rohrstück 4 geführt ist.

Der Elektrolyseeinheit 3 ist ein Durchmischer 28 nachgeschaltet. Zusätzlich oder alternativ kann der Elektrolyseeinheit 3 auch ein Regelsystem zur Einstellung eines vorgebbaren Wasserdrucks nachgeschaltet sein.

Beim Betrieb der Begasungsvorrichtung 1 wird das in das Rohrleitungssystem 8 geschaltete Rohrstück 4 von im Teilsystem 2 geführtem Wasser W durchströmt. Ein durch die Pfeile T symbolisierter Teilstrom des Wasser W gelangt dabei durch die Zutrittsöffnungen 20 in die Membranelektrolysezellen 10. Durch Anlegen einer Spannung an die Anode 14 und die Kathode 16 jeder Membranelektrolysezelle 10 wird das jeder Membranelektrolysezelle 10 zugeführte Wasser in Wasserstoff H₂ und in Sauerstoff O₂ zersetzt. Der Wasserstoff H₂ gelangt durch die Austrittsöffnung 22 in das im Teilsystem 2 geführte Wasser W und löst sich darin. Um diese Lösung zu begünstigen, werden der Wasserstoff H₂ und das Wasser W in dem Durchmischer 28 durchmischt. Alternativ oder zusätzlich kann über das Regelsystem ein in Abhängigkeit von einer Wasserstoff-Sollkonzentration vorgebbarer Wasserdruck im Wasser W eingestellt werden. Der bei der Zersetzung der Teilmenge des Wassers W produzierte Sauerstoff 02 wird über das Ableitungssystem 26 abgeführt.

Im Ausführungsbeispiel ist die Begasungsvorrichtung 1 zur Begasung des Wassers W mit Wasserstoff H₂ ausgelegt.

Aufgrund der kompakten Bauweise der Membranelektrolysezellen 10 ist die Begasungsvorrichtung 1 besonders raumsparend und somit besonders flexibel in das Teilsystem 2 der technischen Anlage einschaltbar. Die Wasserstoff produktion ist somit, auch durch eine variable Anordnung einer Anzahl von Begasungsvorrichtungen 1 im Teilsystem 2, besonders flexibel an die Erfordernisse der Wasserstoff produktion anpaßbar.

## Patentansprüche

1. Begasungsvorrichtung (1) für in einem Teilsystem einer technischen Anlage geführtes Wasser (W) mit Wasserstoff (H₂), bei der in das Teilsystem eine Elektrolyseeinheit (3) zur Zersetzung einer Teilmenge des dort geführten Wassers (W) in Wasserstoff (H₂) und Sauerstoff (O₂) geschaltet ist, wobei an die Elektrolyseeinheit (3) ein Ableitungssystem (26) für Sauerstoff (O₂) angeschlossen ist.

2. Begasungsvorrichtung nach Anspruch 1, deren Elektrolyseeinheit (3) eine Anzahl von Membranelektrolysezellen (10) umfaßt.

3. Begasungsvorrichtung nach Anspruch 1 oder 2, deren Elektrolyseeinheit (3) ein vom Wasser (W) des Teilsystems durchströmbarer Durchmischer (28) nachgeschaltet ist.

4. Begasungsvorrichtung nach einem der Ansprüche 1 bis 3, deren Elektrolyseeinheit (3) ein Regelsystem zur Einstellung eines vorgebbaren Wasserdrucks nachgeschaltet ist.

5. Begasungsvorrichtung nach einem der Ansprüche 1 bis 4, deren Elektrolyseeinheit (3) ein Ionenaustauscher (9) als Filter vorgeschaltet ist.

## Claims

1. Device (1) for gassing water (W) which is carried in a subsystem of a technical installation with hydrogen (H₂), in which there is connected into in the subsystem an electrolysis unit (3) for the decomposition of a partial amount of the water (W) carried therein into hydrogen (H₂) and oxygen (O₂), with a discharge system (26) for oxygen (O₂) being connected to the electrolysis unit (3).

2. Gassing device according to claim 1, the electrolysis unit (3) of which comprises a number of membrane electrolysis cells (10).

3. Gassing device according to claim 1 or 2, connected downstream of the electrolysis unit (3) of which is a mixer (28) through which the water (W) of the subsystem can flow.

4. Gassing device according to one of claims 1 to 3, connected downstream of the electrolysis unit (3) of which is a regulating system for adjusting a predeterminable water pressure.

5. Gassing device according to one of claims 1 to 4, connected upstream of the electrolysis unit (3) of which is of an ion exchanger (9) as a filter.

## Revendications

1. Dispositif (1) de gazéification par de l'hydrogène (H₂), de l'eau (W) qui passe dans un sous-système d'une installation technique, dans lequel il est monté dans le sous-système une unité (3) d'électrolyse de décomposition d'une quantité partielle de l'eau (W) qui passe en hydrogène (H₂) et en oxygène (O₂), un système (26) d'évacuation de l'oxygène (O₂) étant raccordé à l'unité (3) d'électrolyse.

2. Dispositif de gazéification suivant la revendication 1, dont l'unité (3) d'électrolyse comporte un certain nombre de cellules (10) d'électrolyse à membrane.

3. Dispositif de gazéification suivant la revendication 1 ou 2, dans laquelle un mélangeur (28) dans lequel peut passer de l'eau (W) du sous-système est monté en aval de l'unité (3) d'électrolyse.

4. Dispositif de gazéification suivant l'une des revendications 1 à 3, dans lequel un système de régulation destiné à établir une pression (2) pouvant être prescrite est monté en aval de l'unité (3) d'électrolyse.

5. Dispositif de gazéification suivant l'une des revendications 1 à 4, dans lequel un échangeur (9) d'ions est monté en tant que filtre en amont de l'unité d'électrolyse.
